# EUROPEAN PATENT SPECIFICATION

(11) **EP 3 121 245 B1**
(45) Date of publication and mention of the grant of the patent: **10.05.2023**
(21) Application number: 16187138.9
(22) Date of filing: 27.06.2013
(51) Int. Cl.: C09K 8/42, C09K 8/40, C04B 28/02, C04B 103/40, C09K 8/467

(54) **FOAMED SPACER FLUIDS CONTAINING CEMENT KILN DUST**
VERFAHREN ZUR VERWENDUNG VON GESCHÄUMTEN SPACERFLÜSSIGKEITEN MIT ZEMENTOFENSTAUB
FLUIDES-MOUSSES DE SÉPARATION CONTENANT DE LA POUSSIÈRE DE
FOURS À CIMENT ET PROCÉDÉS D'UTILISATION

(30) Priority: 27.06.2012 US 201213535145
(43) Date of publication of application: 25.01.2017
(62) Divisional of application: 13736708.2
(73) Proprietor: Halliburton Energy Services Inc., Houston, Texas 77032 (US)
(72) Inventor: BENKLEY, James, Duncan, OK 73533 (US); SPENCER, Joseph, Oklahoma City, Oklahoma 73132 (US); KRANZ, Zachery Robert, Oklahoma City, OK 73142 (US); GARRISON, Christopher Jay, Panhandle, TX 79068 (US); BRENNEIS, D. Chad, Marlow, OK 73055 (US); RODDY, Craig, Duncan, OK 73533 (US)
(74) Representative: Turner, Craig Robert

(56) References cited:
- US-A1- 2010 258 312
- US-A1- 2011 017 452
- US-A1- 2012 145 393
- US-B1- 6 668 927

## Description

### BACKGROUND

The present invention relates to spacer fluids for use in subterranean operations and, more particularly, to foamed spacer fluids comprising cement kiln dust ("CKD").

Spacer fluids are often used in subterranean operations to facilitate improved displacement efficiency when introducing new fluids into a well bore. For example, a spacer fluid can be used to displace a fluid in a well bore before introduction of another fluid. When used for drilling fluid displacement, spacer fluids can enhance solids removal as well as separate the drilling fluid from a physically incompatible fluid. For instance, in primary cementing operations, the spacer fluid may be placed into the well bore to separate the cement composition from the drilling fluid. Spacer fluids may also be placed between different drilling fluids during drilling change outs or between a drilling fluid and a completion brine, for example.

To be effective, the spacer fluid can have certain characteristics. For example, the spacer fluid may be compatible with the drilling fluid and the cement composition. This compatibility may also be present at downhole temperatures and pressures. In some instances, it is also desirable for the spacer fluid to leave surfaces in the well bore water wet, thus facilitating bonding with the cement composition. Rheology of the spacer fluid can also be important. A number of different rheological properties may be important in the design of a spacer fluid, including yield point, plastic viscosity, gel strength, and shear stress, among others. While rheology can be important in spacer fluid design, conventional spacer fluids may not have the desired rheology at downhole temperatures. For instance, conventional spacer fluids may experience undesired thermal thinning at elevated temperatures. As a result, conventional spacer fluids may not provide the desired displacement in some instances. US2011017452 A1 related to spacer fluids comprising cement kiln dust and methods of use in subterranean formations. US6668927 B1 relates to well completion foamed spacer fluids and methods of using the foamed spacer fluids. US2012/145393 A1 relates to methods and compositions for subterranean treatment comprising cement kiln dust.

### SUMMARY

The present invention relates to spacer fluids for use in subterranean operations and, more particularly, to foamed spacer fluids comprising CKD.

There is described a method comprising: providing a foamed spacer fluid comprising CKD, a foaming agent, a gas, and water; and introducing the foamed spacer fluid into a well bore to displace at least a portion of a first fluid present in the well bore .

There is described a method comprising: providing a foamed spacer fluid comprising a partially calcined kiln feed removed from a gas stream, a foaming agent, a gas, and water, wherein the partially calcined kiln feed comprises SiO₂, Al₂O₃, Fe₂O₃, CaO, MgO, SO₃, Na₂O, and K₂O; and introducing the foamed spacer fluid into a well bore to displace at least a portion of a first fluid present in the well bore.

There is described a foamed spacer fluid comprising: CKD, a foaming agent, a gas, and water, wherein the foamed spacer fluid has: a higher yield point at 130°F (54°C) than at 80° F (27°C), a higher yield point at 180° F (82°C) than at 80° F (27°C), and/or a higher plastic viscosity at 180°F (82°C) than at 80° F (27°C).

According to the invention, there is provided a foamed spacer fluid including cement kiln dust; a free water control agent; a lightweight additive comprising hollow microspheres, gilsonite, or any combination thereof; a foaming agent; a gas; and water. The foamed spacer fluid has: a higher yield point at 130° F (54°C) than at 80° F (27°C), a higher yield point at 180° F (82°C) than at 80° F (27°C), and/or a higher plastic viscosity at 180°F (82°C) than at 80° F (27°C). The yield point of the foamed spacer fluid at 180°F (82°C) is greater than 20 1b/100 ft2 (0.98 kg/m2) and the foamed spacer fluid has a density in a range of from 4 lb/gal (479 kg/m3) to 13 lb/gal (1560 kg/m3).

The features and advantages of the present invention will be readily apparent to those skilled in the art.

### DETAILED DESCRIPTION

Disclosed herein are spacer fluids for use in subterranean operations and, more particularly, foamed spacer fluids that comprise CKD and methods that use CKD for enhancing one or more rheological properties of a spacer fluid. There may be several potential advantages to the disclosed methods and compositions, only some of which may be alluded to herein. One of the many potential advantages of the methods and compositions is that the CKD may be used in spacer fluids as a rheology modifier allowing formulation of a spacer fluid with desirable rheological properties. Another potential advantage of the methods and compositions is that inclusion of the CKD in the spacer fluids may result in a spacer fluid without undesired thermal thinning. Yet another potential advantage is that spacer fluids comprising CKD may be more economical than conventional spacer fluids, which are commonly prepared with higher cost additives. Yet another potential advantage is that foamed spacer fluids comprising CKD may be used for displacement of lightweight drilling fluids.

The spacer fluids comprise water and CKD. The spacer fluids are foamed. The foamed spacer fluids comprise water, CKD, a foaming agent, and a gas. A foamed spacer fluid may be used, for example, where it is desired for the spacer fluid to be lightweight. The spacer fluid may be used to displace a first fluid from a well bore with the spacer fluid having a higher yield point than the first fluid. For example, the spacer fluid may be used to displace at least a portion of a drilling fluid from the well bore. Other optional additives may also be included in the spacer fluids as desired for a particular application. For example, the spacer fluids may further comprise viscosifying agents, organic polymers, dispersants, surfactants, weighting agents, and any combination thereof.

The spacer fluids generally should have a density suitable for a particular application as desired by those of ordinary skill in the art, with the benefit of this disclosure. Described herein are spacer fluids with a density in the range of from about 4 pounds per gallon ("Ib/gal") (0.48 kg/I) to about 24 lb/gal (2.9 kg/l). In other examples, the spacer fluids may have a density in the range of about 4 lb/gal (0.48 kg/l) to about 17 lb/gal (2 kg/l). In yet other examples, the spacer fluids may have a density in the range of about 8 lb/gal (0.96 kg/I) to about 13 lb/gal (1.6 kg/l). The spacer fluids may be foamed or unfoamed or comprise other means to reduce their densities known in the art, such as lightweight additives. Those of ordinary skill in the art, with the benefit of this disclosure, will recognize the appropriate density for a particular application. According to the invention, the foamed spacer fluid has a density in a range of from 4 lb/gal (479 kg/m³) to 13 lb/gal (1560 kg/m³).

The water used in the spacer fluids may include, for example, freshwater, saltwater (*e.g*., water containing one or more salts dissolved therein), brine (*e.g*., saturated saltwater produced from subterranean formations), seawater, or any combination thereof. Generally, the water may be from any source, provided that the water does not contain an excess of compounds that may undesirably affect other components in the spacer fluid. The water is included in an amount sufficient to form a pumpable spacer fluid. The water may be included in the spacer fluids in an amount in the range of from about 15% to about 95% by weight of the spacer fluid. In other examples, the water may be included in the spacer fluids in an amount in the range of from about 25% to about 85% by weight of the spacer fluid. One of ordinary skill in the art, with the benefit of this disclosure, will recognize the appropriate amount of water to include for a chosen application.

The CKD may be included in the spacer fluids as a rheology modifier. Among other things, using CKD can provide spacer fluids having rheology suitable for a particular application. Desirable rheology may be advantageous to provide a spacer fluid that is effective for drilling fluid displacement, for example. In some instances, the CKD can be used to provide a spacer fluid with a low degree of thermal thinning. For example, the spacer fluid may even have a yield point that increases at elevated temperatures, such as those encountered downhole.

CKD is a material generated during the manufacture of cement that is commonly referred to as cement kiln dust. The term "CKD" is used herein to mean cement kiln dust as described herein and equivalent forms of cement kiln dust made in other ways. The term "CKD" typically refers to a partially calcined kiln feed which can be removed from the gas stream and collected, for example, in a dust collector during the manufacture of cement. Usually, large quantities of CKD are collected in the production of cement that are commonly disposed of as waste. Disposal of the waste CKD can add undesirable costs to the manufacture of the cement, as well as the environmental concerns associated with its disposal. Because the CKD is commonly disposed as a waste material, spacer fluids prepared with CKD may be more economical than conventional spacer fluids, which are commonly prepared with higher cost additives. The chemical analysis of CKD from various cement manufactures varies depending on a number of factors, including the particular kiln feed, the efficiencies of the cement production operation, and the associated dust collection systems. CKD generally may comprise a variety of oxides, such as SiO₂, Al₂O₃, Fe₂O₃, CaO, MgO, SO₃, Na₂O, and K₂O.

The CKD may be included in the spacer fluids in an amount sufficient to provide, for example, the desired rheological properties. The CKD may be present in the spacer fluids in an amount in the range of from about 1% to about 65% by weight of the spacer fluid (*e.g*., about 1%, about 5%, about 10%, about 15%, about 20%, about 25%, about 30%, about 35%, about 40%, about 45%, about 50%, about 55%, about 60%, about 65%, etc.). The CKD may be present in the spacer fluids in an amount in the range of from about 5% to about 60% by weight of the spacer fluid. In some examples, the CKD may be present in an amount in the range of from about 20% to about 35% by weight of the spacer fluid. Alternatively, the amount of CKD may be expressed by weight of dry solids. As used herein, the term "by weight dry solids" refers to the amount of a component, such as CKD, relative to the overall amount of dry solids used in preparation of the spacer fluid. For example, the CKD may be present in an amount in a range of from about 1% to 100% by weight of dry solids (e.g., about 1%, about 5%, about 10%, about 20%, about 30%, about 40%, about 50%, about 60%, about 70%, about 80%, about 90%, 100%, etc.). In some examples, the CKD may be present in an amount in the range of from about 50% to 100% and, alternatively, from about 80% to 100% by weight of dry solids. One of ordinary skill in the art, with the benefit of this disclosure, will recognize the appropriate amount of CKD to include for a chosen application.

While the preceding description describes CKD, herein disclosed is the use of other partially calcined kiln feeds. For example, the spacer fluids may comprise lime kiln dust, which is a material that is generated during the manufacture of lime. The term lime kiln dust typically refers to a partially calcined kiln feed which can be removed from the gas stream and collected, for example, in a dust collector during the manufacture of lime. The chemical analysis of lime kiln dust from various lime manufactures varies depending on a number of factors, including the particular limestone or dolomitic limestone feed, the type of kiln, the mode of operation of the kiln, the efficiencies of the lime production operation, and the associated dust collection systems. Lime kiln dust generally may comprise varying amounts of free lime and free magnesium, lime stone, and/or dolomitic limestone and a variety of oxides, such as SiO₂, Al₂O₃, Fe₂O₃, CaO, MgO, SO₃, Na₂O, and K₂O, and other components, such as chlorides.

Optionally, the spacer fluids may further comprise fly ash. A variety of fly ashes may be suitable, including fly ash classified as Class C or Class F fly ash according to American Petroleum Institute, API Specification for Materials and Testing for Well Cements, API Specification 10, Fifth Ed., July 1, 1990. Suitable examples of fly ash include, but are not limited to, POZMIX^{®} A cement additive, commercially available from Halliburton Energy Services, Inc., Duncan, Oklahoma. Where used, the fly ash generally may be included in the spacer fluids in an amount desired for a particular application. The fly ash may be present in the spacer fluids in an amount in the range of from about 1% to about 60% by weight of the spacer fluid (*e.g*., about 5%, about 10%, about 15%, about 20%, about 25%, about 30%, about 35%, about 40%, about 45%, about 50%, about 55%, etc.). The fly ash may be present in the spacer fluids in an amount in the range of from about 1% to about 35% by weight of the spacer fluid. In some examples, the fly ash may be present in the spacer fluids in an amount in the range of from about 1% to about 10% by weight of the spacer fluid. Alternatively, the amount of fly ash may be expressed by weight of dry solids. For example, the fly ash may be present in an amount in a range of from about 1% to about 99% by weight of dry solids (*e.g*., about 1%, about 5%, about 10%, about 20%, about 30%, about 40%, about 50%, about 60%, about 70%, about 80%, about 90%, about 99%, etc.). The fly ash may be present in an amount in the range of from about 1% to about 20% and, alternatively, from about 1% to about 10% by weight of dry solids. One of ordinary skill in the art, with the benefit of this disclosure, will recognize the appropriate amount of the fly ash to include for a chosen application.

The spacer fluids further comprise a free water control additive. As used herein, the term "free water control additive" refers to an additive included in a liquid for, among other things, reducing (or preventing) the presence of free water in the liquid. Free water control additive may also reduce (or prevent) the settling of solids. Examples of suitable free water control additives include, but are not limited to, bentonite, amorphous silica, hydroxyethyl cellulose, and combinations thereof. An example of a suitable free water control additive is SA-1015^{™} suspending agent, available from Halliburton Energy Services, Inc. Another example of a suitable free water control additive is WG-17^{™} solid additive, available from Halliburton Energy Services, Inc. The free water control additive may be provided as a dry solid. Where used, the free water control additive may be present in an amount in the range of from about 0.1% to about 16% by weight of dry solids, for example. In alternative examples, the free water control additive may be present in an amount in the range of from about 0.1% to about 2% by weight of dry solids.

The spacer fluids further comprise a lightweight additive. The lightweight additive may be included to reduce the density of the spacer fluids. For example, the lightweight additive may be used to form a lightweight spacer fluid, for example, having a density of less than about 13 lb/gal (1.6 kg/I). The lightweight additive typically may have a specific gravity of less than about 2.0. Examples of suitable lightweight additives may include sodium silicate, hollow microspheres, gilsonite, perlite, and combinations thereof. An example of a suitable sodium silicate is ECONOLITE^{™} additive, available from Halliburton Energy Services, Inc. Where used, the lightweight additive may be present in an amount in the range of from about 0.1% to about 20% by weight of dry solids, for example. The lightweight additive may be present in an amount in the range of from about 1% to about 10% by weight of dry solids.

As previously mentioned, the spacer fluids are foamed with a gas, for example, to provide a spacer fluid with a reduced density. It should be understood that reduced densities may be needed for the spacer fluids to more approximately match the density of a particular drilling fluid, for example, where lightweight drilling fluids are being used. A drilling fluid may be considered lightweight if it has a density of less than about 13 lb/gal (1.6 kg/l), alternatively, less than about 10 lb/gal (1.2 kg/l), and alternatively less than about 9 lb/gal (1.1 kg/l). In some examples, the spacer fluids may be foamed to have a density within about 10% of the density of the drilling fluid and, alternatively, within about 5% of the density of the drilling fluid. While techniques, such as lightweight additives, may be used to reduce the density of the spacer fluids comprising CKD without foaming, these techniques may have drawbacks. For example, reduction of the spacer fluid's density to below about 13 lb/gal (1.6 kg/I) using lightweight additives may produce unstable slurries, which can have problems with settling of solids, floating of lightweight additives, and free water, among others. Accordingly, the spacer fluid may be foamed to provide a spacer fluid having a reduced density that is more stable.

Therefore, the spacer fluids are foamed and comprise water, CKD, a foaming agent, and a gas. To provide a spacer fluid with a lower density and more stable foam, the foamed spacer fluid further comprises a lightweight additive, for example. With the lightweight additive, a base slurry may be prepared that may then be foamed to provide an even lower density. A foamed spacer fluid may have a density in the range of from about 4 lb/gal (0.48 kg/l) to about 13 lb/gal (1.6 kg/l) and, alternatively, about 7 lb/gal (0.84 kg/I) to about 9 lb/gal (1.1 kg/l). In one particular example, a base slurry may be foamed from a density of in the range of from about 9 lb/gal (1.1 kg/I) to about 13 lb/gal (1.6 kg/I) to a lower density, for example, in a range of from about 7 lb/gal (0.84 kg/I) to about 9 lb/gal (1.1 kg/l).

The gas used in the foamed spacer fluids may be any suitable gas for foaming the spacer fluid, including, but not limited to air, nitrogen, and combinations thereof. Generally, the gas should be present in the foamed spacer fluids in an amount sufficient to form the desired foam. In certain examples, the gas may be present in an amount in the range of from about 5% to about 80% by volume of the foamed spacer fluid at atmospheric pressure, alternatively, about 5% to about 55% by volume, and, alternatively, about 15% to about 30% by volume.

Where foamed, the spacer fluids comprise a foaming agent for providing a suitable foam. As used herein, the term "foaming agent" refers to a material or combination of materials that facilitate the formation of a foam in a liquid. Any suitable foaming agent for forming a foam in an aqueous liquid may be used in the spacer fluids. Examples of suitable foaming agents may include, but are not limited to: mixtures of an ammonium salt of an alkyl ether sulfate, a cocoamidopropyl betaine surfactant, a cocoamidopropyl dimethylamine oxide surfactant, sodium chloride, and water; mixtures of an ammonium salt of an alkyl ether sulfate surfactant, a cocoamidopropyl hydroxysultaine surfactant, a cocoamidopropyl dimethylamine oxide surfactant, sodium chloride, and water; hydrolyzed keratin; mixtures of an ethoxylated alcohol ether sulfate surfactant, an alkyl or alkene amidopropyl betaine surfactant, and an alkyl or alkene dimethylamine oxide surfactant; aqueous solutions of an alpha-olefinic sulfonate surfactant and a betaine surfactant; and combinations thereof. An example of a suitable foaming agent is FOAMER^{™} 760 foamer/stabilizer, available from Halliburton Energy Services, Inc. Suitable foaming agents are described in U.S. Patent Nos. 6,797,054, 6,547,871, 6,367,550, 6,063,738, and 5,897,699.

Generally, the foaming agent may be present in the foamed spacer fluids in an amount sufficient to provide a suitable foam. In some examples, the foaming agent may be present in an amount in the range of from about 0.8% to about 5% by volume of the water ("bvow").

A wide variety of additional additives may be included in the spacer fluids as deemed appropriate by one skilled in the art, with the benefit of this disclosure. Examples of such additives include, but are not limited to, weighting agents, viscosifying agents (*e.g.*, clays, hydratable polymers, guar gum), fluid loss control additives, lost circulation materials, filtration control additives, dispersants, defoamers, corrosion inhibitors, scale inhibitors, formation conditioning agents. Specific examples of these, and other, additives include organic polymers, surfactants, crystalline silica, amorphous silica, fumed silica, salts, fibers, hydratable clays, microspheres, rice husk ash, combinations thereof, and the like. A person having ordinary skill in the art, with the benefit of this disclosure, will readily be able to determine the type and amount of additive useful for a particular application and desired result.

The spacer fluids may be prepared in accordance with any suitable technique. The desired quantity of water may be introduced into a mixer (*e.g*., a cement blender) followed by the dry blend. The dry blend may comprise the CKD and additional solid additives, for example. Additional liquid additives, if any, may be added to the water as desired prior to, or after, combination with the dry blend. This mixture may be agitated for a sufficient period of time to form a base slurry. This base slurry may then be introduced into the well bore via pumps, for example. In the foamed spacer fluid, the base slurry may be pumped into the well bore, and a foaming agent may be metered into the base slurry followed by injection of a gas, *e.g*., at a foam mixing "T," in an amount sufficient to foam the base slurry thereby forming a foamed spacer fluid. After foaming, the foamed spacer fluid may be introduced into a well bore. As will be appreciated by those of ordinary skill in the art, with the benefit of this disclosure, other suitable techniques for preparing spacer fluids may be used.

An example method includes a method of enhancing rheological properties of a spacer fluid. The method may comprise including CKD in a spacer fluid. The CKD may be included in the spacer fluid in an amount sufficient to provide a higher yield point than a first fluid. The higher yield point may be desirable, for example, to effectively displace the first fluid from the well bore. As used herein, the term "yield point" refers to the resistance of a fluid to initial flow, or representing the stress required to start fluid movement. In an example, the yield point of the spacer fluid at a temperature of up to about 180°F (82° C) is greater than about 5 lb/100 ft² (0.24 kg/m²). In an example, the yield point of the spacer fluid at a temperature of up to about 180°F (82° C) is greater than about 10 lb/100 ft² (0.49 kg/m²). In an example, the yield point of the spacer fluid at a temperature of up to about 180°F (82° C) is greater than about 20 lb/100 ft² (0.98 kg/m²). According to the invention, the foamed spacer fluid has: a higher yield point at 130° F (54°C) than at 80° F (27°C); a higher yield point at 180° F (82°C) than at 80° F (27°C), and/or a higher plastic viscosity at 180°F (82°C) than at 80° F (27°C). It may be desirable for the spacer fluid to not thermally thin to a yield point below the first fluid at elevated temperatures. Accordingly, the spacer fluid may have a higher yield point than the first fluid at elevated temperatures, such as 180° F (82° C) or bottom hole static temperature ("BHST"). The spacer fluid may have a yield point that increases at elevated temperatures. For example, the spacer fluid may have a yield point that is higher at 180° F (82° C) than at 80° F (27° C). By way of further example, the spacer fluid may have a yield point that is higher at BHST than at 80° F (27° C).

Another example method includes a method of displacing a first fluid from a well bore, the well bore penetrating a subterranean formation. The method may comprise providing a spacer fluid that comprises CKD and water. The method may further comprise introducing the spacer fluid into the well bore to displace at least a portion of the first fluid from the well bore. The spacer fluid may be characterized by having a higher yield point than the first fluid at 80°F (27°C). The spacer fluid may be characterized by having a higher yield point than the first fluid at 130°F (54°C). The spacer fluid may be characterized by having a higher yield point than the first fluid at 180°F (82°C).

In an example, the first fluid displaced by the spacer fluid comprises a drilling fluid. By way of example, the spacer fluid may be used to displace the drilling fluid from the well bore. The drilling fluid may include, for example, any number of fluids, such as solid suspensions, mixtures, and emulsions. Additional steps in the method may comprise introducing a pipe string into the well bore, introducing a cement composition into the well bore with the spacer fluid separating the cement composition and the first fluid. The cement composition may be allowed to set in the well bore. The cement composition may include, for example, cement and water.

Another example method includes a method of separating fluids in a well bore, the well bore penetrating a subterranean formation. The method may comprise introducing a spacer fluid into the well bore, the well bore having a first fluid disposed therein. The spacer fluid may comprise, for example, CKD and water. The method may further comprise introducing a second fluid into the well bore with the spacer fluid separating the first fluid and the second fluid. In an example, the first fluid comprises a drilling fluid and the second fluid comprises a cement composition. By way of example, the spacer fluid may prevent the cement composition from contacting the drilling fluid. In an example, the cement composition comprises cement kiln dust, water, and optionally a hydraulic cementitious material. A variety of hydraulic cements may be utilized, including, but not limited to, those comprising calcium, aluminum, silicon, oxygen, iron, and/or sulfur, which set and harden by reaction with water. Suitable hydraulic cements include, but are not limited to, Portland cements, pozzolana cements, gypsum cements, high alumina content cements, slag cements, silica cements, and combinations thereof. In certain examples, the hydraulic cement may comprise a Portland cement. The Portland cements that are suited for use may be classified as Classes A, C, H, and G cements according to American Petroleum Institute, API Specification for Materials and Testing for Well Cements, API Specification 10, Fifth Ed., Jul. 1, 1990. The spacer fluid may also remove the drilling fluid, dehydrated/gelled drilling fluid, and/or filter cake solids from the well bore in advance of the cement composition. Removal of these compositions from the well bore may enhance bonding of the cement composition to surfaces in the well bore. In an additional example, at least a portion of used and/or unused CKD containing spacer fluid are included in the cement composition that is placed into the well and allowed to set.

To facilitate a better understanding, the following examples are given. In no way should the following examples be read to limit, or define, the scope of the invention. For the avoidance of doubt, the scope of the invention is defined by the appended claims. In the following examples, concentrations are given in weight percent of the overall composition.

### EXAMPLE 1

Sample spacer fluids were prepared to evaluate the rheological properties of spacer fluids containing CKD. The sample spacer fluids were prepared as follows. First, all dry components (*e.g*., CKD, fly ash, bentonite, FWCA, etc.) were weighed into a glass container having a clean lid and agitated by hand until blended. Tap water was then weighed into a Waring blender jar. The dry components were then mixed into the water with 4,000 rpm stirring. The blender speed was then increased to 12,000 rpm for about 35 seconds.

Sample Spacer Fluid No. 1 was an 11 pound per gallon (1.3 kg/l) slurry that comprised 60.62% water, 34.17% CKD, 4.63% fly ash, and 0.58% free water control additive (WG-17^{™} solid additive).

Sample Spacer Fluid No. 2 was an 11 pound per gallon (1.3 kg/l) slurry that comprised 60.79% water, 30.42% CKD, 4.13% fly ash, 0.17% free water control additive (WG-17^{™} solid additive), 3.45% bentonite, and 1.04% Econolite^{™} additive.

Rheological values were then determined using a Fann Model 35 Viscometer. Dial readings were recorded at speeds of 3, 6, 100, 200, and 300 with a B1 bob, an R1 rotor, and a 1.0 spring. The dial readings, plastic viscosity, and yield points for the spacer fluids were measured in accordance with API Recommended Practices 10B, Bingham plastic model and are set forth in the table below. The abbreviation "PV" refers to plastic viscosity, while the abbreviation "YP" refers to yield point.

**TABLE 1**

| **Sample Fluid** | **Temp. (° F)** [°C] | **Viscometer RPM** | | | | | **PV (mPa/s)** | **YP (lb/ 100 ft²⁾** [kg/m²] |
|---|---|---|---|---|---|---|---|---|
| | | **300** | **200** | **100** | **6** | **3** | | |
| 1 | 80 [27] | 145 | 127 | 90 | 24 | 14 | 113.3 | 27.4 [1.34] |
| | 180 [82] | 168 | 143 | 105 | 26 | 15 | 154.5 | 30.3 [1.48] |
| 2 | 80 [27] | 65 | 53 | 43 | 27 | 22 | 41.1 | 26.9 [1.31] |
| | 180 [82] | 70 | 61 | 55 | 22 | 18 | 51.6 | 25.8 [1.26] |

The thickening time of the Sample Spacer Fluid No. 1 was also determined in accordance with API Recommended Practice 10B at 205° F (96°C). Sample Spacer Fluid No. 1 had a thickening time of more than 6:00+ hours at 35 Bc.

Accordingly, the above example illustrates that the addition of CKD to a spacer fluid may provide suitable properties for use in subterranean applications. In particular, the above example illustrates, *inter alia*, that CKD may be used to provide a spacer fluid that may not exhibit thermal thinning with the spacer fluid potentially even having a yield point that increases with temperature. For example, Sample Spacer Fluid No. 2 had a higher yield point at 180° F than at 80° F. In addition, the yield point of Sample Spacer Fluid No. 1 had only a slight decrease at 180° F as compared to 80° F. Even further, the example illustrates that addition of CKD to a spacer fluid may provide a plastic viscosity that increases with temperature.

### EXAMPLE 2

Additional sample spacer fluids were prepared to further evaluate the rheological properties of spacer fluids containing CKD. The sample spacer fluids were prepared as follows. First, all dry components (*e.g*., CKD, fly ash) were weighed into a glass container having a clean lid and agitated by hand until blended. Tap water was then weighed into a Waring blender jar. The dry components were then mixed into the water with 4,000 rpm stirring. The blender speed was then increased to 12,000 rpm for about 35 seconds.

Sample Fluid No. 3 was a 12.5 pound per gallon (1.5 kg/l) fluid that comprised 47.29% water and 52.71% CKD.

Sample Fluid No. 4 was a 12.5 pound per gallon (1.5 kg/l) fluid that comprised 46.47% water, 40.15% CKD, and 13.38% fly ash.

Sample Fluid No. 5 was a 12.5 pound per gallon (1.5 kg/l) fluid that comprised 45.62% water, 27.19% CKD, and 27.19% fly ash.

Sample Fluid No. 6 was a 12.5 pound per gallon (1.5 kg/l) fluid that comprised 44.75% water, 13.81% CKD, and 41.44% fly ash.

Sample Fluid No. 7 (comparative) was a 12.5 pound per gallon (1.5 kg/l) fluid that comprised 43.85% water, and 56.15% fly ash.

Rheological values were then determined using a Fann Model 35 Viscometer. Dial readings were recorded at speeds of 3, 6, 30, 60, 100, 200, 300, and 600 with a B1 bob, an R1 rotor, and a 1.0 spring. The dial readings, plastic viscosity, and yield points for the spacer fluids were measured in accordance with API Recommended Practices 10B, Bingham plastic model and are set forth in the table below. The abbreviation "PV" refers to plastic viscosity, while the abbreviation "YP" refers to yield point.

**TABLE 2**

| **Sample Spacer Fluid** | **CKD-Fly Ash Ratio** | **Temp. (° F)** [°C] | **Viscometer RPM** | | | | | | | | **PV (mPa /s)** | **YP (lb/ 100 ft²⁾** [kg/m²] |
|---|---|---|---|---|---|---|---|---|---|---|---|---|
| | | | **600** | **300** | **200** | **100** | **60** | **30** | **6** | **3** | | |
| 3 | 100:0 | 80 [27] | 33 | 23 | 20 | 15 | 13 | 12 | 8 | 6 | 12 | 11 [0.54] |
| | | 130 [54] | 39 | 31 | 27 | 23 | 22 | 19 | 16 | 11 | 12 | 19 [0.93] |
| | | 180 [82] | 66 | 58 | 51 | 47 | 40 | 38 | 21 | 18 | 16.5 | [2.03] |
| 4 | 75:25 | 80 [27] | 28 | 22 | 19 | 15 | 14 | 11 | 8 | 6 | 10.5 | 11.5 [0.56] |
| | | 130 [54] | 39 | 28 | 25 | 21 | 19 | 16 | 14 | 11 | 10.5 | 17.5 [0.85] |
| | | 180 [82] | 51 | 39 | 36 | 35 | 31 | 26 | 16 | 11 | 6 | 33 [1.6] |
| 5 | 50:50 | 80 [27] | 20 | 11 | 8 | 6 | 5 | 4 | 4 | 3 | 7.5 | 3.5 [0.17] |
| | | 130 [54] | 21 | 15 | 13 | 10 | 9 | 8 | 6 | 5 | 7.5 | 7.5 [0.37] |
| | | 180 [82] | 25 | 20 | 17 | 14 | 13 | 12 | 7 | 5 | 9 | 11 [0.54] |
| 6 | 25:75 | 80 [27] | 16 | 8 | 6 | 3 | 2 | 1 | 0 | 0 | 7.5 | 0.5 [0.02] |
| | | 130 [54] | 15 | 8 | 6 | 4 | 3 | 2 | 1 | 1 | 6 | 2 [0.1] |
| | | 180 [82] | 15 | 9 | 7 | 5 | 4 | 4 | 2 | 2 | 6 | 3 [0.15] |
| 7 (Comp.) | 0:100 | 80 [27] | 16 | 7 | 5 | 3 | 1 | 0 | 0 | 0 | 6 | 1 [0.05] |
| | | 130 [54] | 11 | 4 | 3 | 1 | 0 | 0 | 0 | 0 | 4.5 | -0.5 [-0.02] |
| | | 180 [82] | 8 | 3 | 2 | 0 | 0 | 0 | 0 | 0 | 4.5 | -1.5 [-0.07] |

Accordingly, the above example illustrates that the addition of CKD to a spacer fluid may provide suitable properties for use in subterranean applications. In particular, the above example illustrates, *inter alia*, that CKD may be used to provide a spacer fluid that may not exhibit thermal thinning with the spacer fluid potentially even having a yield point that increases with temperature. In addition, as illustrated in Table 2 above, higher yield points were observed for spacer fluids with higher concentrations of CKD.

### EXAMPLE 3

A sample spacer fluid containing CKD was prepared to compare the rheological properties of a spacer fluid containing CKD with an oil-based drilling fluid. The sample spacer fluid was prepared as follows. First, all dry components (*e.g*., CKD, fly ash, bentonite, etc.) were weighed into a glass container having a clean lid and agitated by hand until blended. Tap water was then weighed into a Waring blender jar. The dry components were then mixed into the water with 4,000 rpm stirring. The blender speed was then increased to 12,000 rpm for about 35 seconds.

Sample Spacer Fluid No. 8 was an 11 pound per gallon (1.3 kg/l) slurry that comprised 60.79% water, 30.42% CKD, 4.13% fly ash, 0.17% free water control additive (WG-17^{™} solid additive), 3.45% bentonite, and 1.04% Econolite^{™} additive.

The oil-based drilling fluid was a 9.1 (1.1 kg/l) pound per gallon oil-based mud.

Rheological values were then determined using a Fann Model 35 Viscometer. Dial readings were recorded at speeds of 3, 6, 100, 200, and 300 with a B1 bob, an R1 rotor, and a 1.0 spring. The dial readings, plastic viscosity, and yield points for the spacer fluid and drilling fluid were measured in accordance with API Recommended Practices 10B, Bingham plastic model and are set forth in the table below. The abbreviation "PV" refers to plastic viscosity, while the abbreviation "YP" refers to yield point. The abbreviation "OBM" refers to oil-based mud.

**TABLE 3**

| **Sample Fluid** | **Temp. (° F)** [°C] | **Viscometer RPM** | | | | | **PV (mPa/s)** | **YP (lb/ 100 ft²⁾** [kg/m²] |
|---|---|---|---|---|---|---|---|---|
| | | **300** | **200** | **100** | **6** | **3** | | |
| 8 | 80 [27] | 59 | 50 | 39 | 22 | 15 | 42 | 21.2 [1.035] |
| | 180 [82] | 82 | 54 | 48 | 16 | 13 | 65.3 | 17 [0.83] |
| OBM | 80 [27] | 83 | 64 | 41 | 11 | 10 | 74.6 | 12.1 [0.59] |
| | 180 [82] | 46 | 35 | 23 | 10 | 10 | 36.7 | 10.5 [0.51] |

Accordingly, the above example illustrates that the addition of CKD to a spacer fluid may provide suitable properties for use in subterranean applications. In particular, the above example illustrates, *inter alia*, that CKD may be used to provide a spacer fluid with a yield point that is greater than a drilling fluid even at elevated temperatures. For example, Sample Spacer Fluid No. 8 has a higher yield point at 180° F (82°C) than the oil-based mud.

### EXAMPLE 4

A foamed spacer fluid was prepared that comprised CKD. First, a base slurry was prepared that had a density of 10 lb/gal (1.2 kg/l) and comprised CKD, a free water control additive (0.7% by weight of CKD), a lightweight additive (4% by weight of CKD), and fresh water (32.16 gallons per 94-pound sack of CKD). The free water control additive was SA-1015^{™} suspending aid. The lightweight additive was ECONOLITE^{™} additive. Next, a foaming agent (FOAMER^{™} 760 foamer/stabilizer) in an amount of 2% bvow was added, and the base slurry was then mixed in a foam blending jar for 4 seconds at 12,000 rpm. The resulting foamed spacer fluid had a density of 8.4 lb/gal (1 kg/I). The "sink" of the resultant foamed spacer fluid was then measured using a free fluid test procedure as specified in API Recommended Practice 10B. However, rather than measuring the free fluid, the amount of "sink" was measured after the foamed spacer fluid remained static for a period of 2 hours. The foamed spacer fluid was initially at 200°F (93°C) and cooled to ambient temperature over the 2-hour period. The measured sink for this foamed spacer fluid was 5 millimeters.

### EXAMPLE 5

Another foamed spacer fluid was prepared that comprised CKD. First, a base slurry was prepared that had a density of 10.5 lb/gal (1.26 kg/I) and comprised CKD, a free water control additive (0.6% by weight of CKD), a lightweight additive (4% by weight of CKD), and fresh water (23.7 gallons per 94-pound sack (90 l per 43 kg) of CKD). The free water control additive was SA-1015^{™} suspending aid. The lightweight additive was ECONOLITE^{™} additive. Next, a foaming agent (a hexylene glycol/cocobetaine blended surfactant) in an amount of 2% bvow was added, and the base slurry was then mixed in a foam blending jar for 6 seconds at 12,000 rpm. The resulting foamed spacer fluid had a density of 8.304 lb/gal (0.995 kg/I). The resultant foamed spacer fluid had a sink of 0 millimeters, measured as described above for Example 4.

## Claims

1. A foamed spacer fluid comprising:
cement kiln dust,
a free water control agent;
a lightweight additive comprising hollow microspheres, gilsonite, or any combination thereof;
a foaming agent,
a gas, and
water,
wherein the foamed spacer fluid has:
(a) a higher yield point at 130° F (54°C) than at 80° F (27°C),
(b) a higher yield point at 180° F (82°C) than at 80° F (27°C), and/or
(c) a higher plastic viscosity at 180°F (82°C) than at 80° F (27°C);
wherein the yield point of the foamed spacer fluid at 180°F (82°C) is greater than 20 lb/100 ft² (0.98 kg/m²); and
wherein the foamed spacer fluid has a density in a range of from 4 Ib/gal (479 kg/m³) to 13 Ib/gal (1560 kg/m³).

2. A foamed spacer fluid according to claim 1 wherein the cement kiln dust is present in the foamed spacer fluid in an amount in a range of from 1% to 60% by weight of the foamed spacer fluid.

3. A foamed spacer fluid according to claim 1 or claim 2 wherein the cement kiln dust is present in the foamed spacer fluid in an amount in a range of from 80% to 100% by weight of dry solids.

4. A foamed spacer fluid according to any one of the preceding claims wherein the gas comprises at least one gas selected from the group consisting of air, nitrogen, and any combination thereof, and wherein the foaming agent comprises at least one additive selected from the group consisting of a mixture of an ammonium salt of an alkyl ether sulfate, a cocoamidopropyl betaine surfactant, a cocoamidopropyl dimethylamine oxide surfactant, sodium chloride, and water; a mixture of an ammonium salt of an alkyl ether sulfate surfactant, a cocoamidopropyl hydroxysultaine surfactant, a cocoamidopropyl dimethylamine oxide surfactant, sodium chloride, and water; hydrolyzed keratin; a mixture of an ethoxylated alcohol ether sulfate surfactant, an alkyl or alkene amidopropyl betaine surfactant, and an alkyl or alkene dimethylamine oxide surfactant; an aqueous solution of an alpha-olefinic sulfonate surfactant and a betaine surfactant; and any combination thereof.

5. A foamed spacer fluid according to any one of the preceding claims wherein the foamed spacer fluid further comprises at least one additive selected from the group consisting of a weighting agent, a viscosifying agent, a fluid loss control additive, a lost circulation material, a filtration control additive, a dispersant, a corrosion inhibitor, a scale inhibitor, a formation conditioning agent, and any combination thereof.

6. A foamed spacer fluid according to any one of the preceding claims wherein the foamed spacer fluid further comprises at least one additive selected from the group consisting of fly ash, a clay, a hydratable polymer, guar gum, an organic polymer, a surfactant, crystalline silica, amorphous silica, fumed silica, a salt, a fiber, hydratable clay, a microsphere, rice husk ash, and any combination thereof.

7. A foamed spacer fluid according to any one of the preceding claims, wherein the lightweight additive has a specific gravity of less than 2.0.

## Patentansprüche

1. Geschäumtes Abstandsfluid, umfassend:
Zementofenstaub,
ein freies Wasserkontrollmittel;
ein leichtes Additiv, das hohle Mikrokügelchen, Gilsonit oder eine beliebige Kombination davon umfasst:
ein Treibmittel,
ein Gas und
Wasser,
wobei das geschäumte Abstandsfluid Folgendes aufweist:
(a) eine höhere Fließgrenze bei 130 °F (54 °C) als bei 80 °F (27 °C),
(b) eine höhere Fließgrenze bei 180°F (82°C) als bei 80°F (27°C) und/oder
(c) eine höhere plastische Viskosität bei 180°F (82°C) als bei 80°F (27°C);
wobei die Fließgrenze des geschäumten Abstandsfluids bei 180°F (82°C) größer als 20 lb/100 ft² (0,98 kg/m²) ist; und
wobei das geschäumte Abstandsfluid eine Dichte im Bereich von 4 lb/gal (479 kg/m³) bis 13 lb/gal (1560 kg/m³) aufweist.

2. Geschäumtes Abstandsfluid nach Anspruch 1, wobei der Zementofenstaub in dem aufgeschäumten Abstandsfluid in einer Menge im Bereich von 1 bis 60 Gew.-% des aufgeschäumten Abstandsfluids vorhanden ist.

3. Geschäumtes Abstandsfluid nach Anspruch 1 oder Anspruch 2, wobei der Zementofenstaub in dem geschäumten Abstandsfluid in einer Menge im Bereich von 80 bis 100 Gew.-% der trockenen Feststoffe vorhanden ist.

4. Geschäumtes Abstandsfluid nach einem der vorhergehenden Ansprüche, wobei das Gas mindestens ein Gas umfasst, das aus der Gruppe ausgewählt ist, die aus Luft, Stickstoff und einer beliebigen Kombination davon besteht, und wobei das Treibmittel mindestens ein Additiv umfasst, ausgewählt aus der Gruppe, bestehend aus einer Mischung aus einem Ammoniumsalz eines Alkylethersulfats, einem Cocoamidopropylbetain-Tensid, einem Cocoamidopropyldimethylaminoxid-Tensid, Natriumchlorid und Wasser; eine Mischung aus einem Ammoniumsalz eines Alkylethersulfat-Tensids, einem Cocoamidopropylhydroxysultain-Tensid, einem Cocoamidopropyldimethylaminoxid-Tensid, Natriumchlorid und Wasser; hydrolysiertem Keratin; einer Mischung aus einem ethoxylierten Alkoholethersulfat-Tensid, einem Alkyl- oder Alkenamidopropylbetain-Tensid und einem Alkyl- oder Alkendimethylaminoxid-Tensid; einer wässrigen Lösung eines alpha-olefinischen Sulfonat-Tensids und eines Betain-Tensids; und einer beliebigen Kombination davon.

5. Geschäumtes Abstandsfluid nach einem der vorhergehenden Ansprüche, wobei das geschäumte Abstandsfluid ferner mindestens ein Additiv umfasst, ausgewählt aus der Gruppe, bestehend aus einem Beschwerungsmittel, einem viskositätserhöhenden Mittel, einem Flüssigkeitsverlust-Kontrolladditiv, einem Zirkulationsverlustmaterial, einem Filtrationskontrolladditiv, einem Dispergiermittel, einem Korrosionsinhibitor, einem Kesselsteininhibitor, einem Formationskonditionierungsmittel und einer beliebigen Kombination davon.

6. Geschäumtes Abstandsfluid nach einem der vorhergehenden Ansprüche, wobei das geschäumte Abstandsfluid ferner mindestens ein Additiv umfasst, ausgewählt aus der Gruppe, bestehend aus Flugasche, einem Ton, einem hydratisierbaren Polymer, Guargummi, einem organischen Polymer, einem Tensid, kristalliner Kieselsäure, amorpher Kieselsäure, pyrogener Kieselsäure, einem Salz, einer Faser, hydratisierbarem Ton, einer Mikrokugel, Reisschalenasche und einer beliebigen Kombination davon.

7. Geschäumtes Abstandsfluid nach einem der vorangehenden Ansprüche, wobei das leichte Additiv ein spezifisches Gewicht von weniger als 2,0 aufweist.

## Revendications

1. Fluide-mousse de séparation comprenant :
de la poussière de four à ciment,
un agent de contrôle d'eau libre ;
un additif léger comprenant des microsphères creuses, de la gilsonite ou toute combinaison de ceux-ci ;
un agent moussant,
un gaz, et
de l'eau,
dans lequel le fluide-mousse de séparation a :
(a)une limite d'élasticité apparente plus élevée à 130 °F (54 °C) qu'à 80 °F (27 °C),
(b)une limite d'élasticité apparente plus élevée à 180 °F (82 °C) qu'à 80 °F (27 °C), et/ou
(c)une viscosité plastique plus élevée à 180 °F (82 °C) qu'à 80 °F (27 °C) ;
dans lequel la limite d'élasticité apparente du fluide-mousse de séparation à 180 °F (82 °C) est supérieure à 20 lb/100 ft² (0,98 kg/m²) ; et
dans lequel le fluide-mousse de séparation a une masse volumique dans une plage de 4 lb/gal (479 kg/m³) à 13 lb/gal (1560 kg/m³).

2. Fluide-mousse de séparation selon la revendication 1 dans lequel la poussière de four à ciment est présente dans le fluide-mousse de séparation en une quantité dans une plage de 1 % à 60 % en poids du fluide-mousse de séparation.

3. Fluide-mousse de séparation selon la revendication 1 ou la revendication 2 dans lequel la poussière de four à ciment est présente dans le fluide-mousse de séparation en une quantité dans une plage de 80 % à 100 % en poids de solides secs.

4. Fluide-mousse de séparation selon l'une quelconque des revendications précédentes dans lequel le gaz comprend au moins un gaz choisi dans le groupe constitué d'air, d'azote et de toute combinaison de ceux-ci, et dans lequel l'agent moussant comprend au moins un additif choisi dans le groupe constitué d'un mélange d'un sel d'ammonium d'un alkyléthersulfate, d'un tensioactif cocoamidopropylbétaïne, d'un tensioactif oxyde de cocoamidopropyldiméthylamine, de chlorure de sodium et d'eau ; d'un mélange d'un sel d'ammonium d'un tensioactif alkyléthersulfate, d'un tensioactif cocoamidopropyl hydroxysultaine, d'un tensioactif oxyde de cocoamidopropyldiméthylamine, de chlorure de sodium et d'eau ; de kératine hydrolysée ; d'un mélange d'un tensioactif éthersulfate d'alcool éthoxylé, d'un tensioactif alkyl ou alcènamidopropylbétaïne et d'un tensioactif oxyde d'alkyl ou alcèndiméthylamine ; d'une solution aqueuse d'un tensioactif sulfonate alpha-oléfinique et d'un tensioactif bétaïne ; et toute combinaison de ceux-ci.

5. Fluide-mousse de séparation selon l'une quelconque des revendications précédentes dans lequel le fluide-mousse de séparation comprend en outre au moins un additif choisi dans le groupe constitué d'un agent alourdissant, d'un agent viscosifiant, d'un additif de contrôle de perte de fluide, d'un colmatant, d'un additif de contrôle de filtration, d'un dispersant, d'un inhibiteur de corrosion, d'un inhibiteur de tartre, d'un agent de conditionnement de formation, et toute combinaison de ceux-ci.

6. Fluide-mousse de séparation selon l'une quelconque des revendications précédentes dans lequel le fluid-mousse de séparation comprend en outre au moins un additif choisi dans le groupe constitué de cendre volante, d'une argile, d'un polymère hydratable, de gomme de guar, d'un polymère organique, d'un tensioactif, de silice cristalline, de silice amorphe, de silice pyrogénée, d'un sel, d'une fibre, d'argile hydratable, d'une microsphère, de cendre de balle de riz, et toute combinaison de ceux-ci.

7. Fluide-mousse de séparation selon l'une quelconque des revendications précédentes, dans lequel l'additif léger a une densité inférieure à 2,0.
